# EUROPEAN PATENT SPECIFICATION

(11) **EP 0 400 744 B1**
(45) Date of publication and mention of the grant of the patent: **09.08.1995**
(21) Application number: 90201341.6
(22) Date of filing: 25.05.1990
(51) Int. Cl.: G11B 15/07, G11B 23/087

(54) **System for recording/reproducing signals on magnetic tape in cassettes**
System für die Aufnahme/Wiedergabe von Signalen auf Magnetband in Kassetten
Système d'enregistrement/de lecture de signaux sur une bande magnétique contenue dans une cassette

(30) Priority: 31.05.1989 NL 8901375
(43) Date of publication of application: 05.12.1990
(73) Proprietor: Philips Electronics N.V., 5621 BA Eindhoven (NL)
(72) Inventor: Vollmann, Norbert Christian, NL-5656 AA Einhoven (NL); Van Weele, Paul Johannes Frits, NL-5656 AA Einhoven (NL)
(74) Representative: Cuppens, Hubertus Martinus Maria

(56) References cited:
- EP-A- 0 184 139
- EP-A- 0 312 106
- GB-A- 2 098 961
- GB-A- 2 131 000
- GB-A- 2 137 959
- GB-A- 2 150 532
- US-A- 3 598 339
- US-A- 4 633 354
- PATENT ABSTRACTS OF JAPAN vol. 8, no. 133 (P-281)(1570) 20 June 1984,& JP-A-59 33680 (NIPPON VICTOR) 23 February 1984,

## Description

The invention relates to a system for recording/reproducing digital audio signals on magnetic tape in cassettes, comprising apparatuses and cassettes of a new digital type in conformity with the a new digital standard.

Various examples of standard recording/reproducing systems can be given. A known system for recording/reproducing video signals (for example the well-known 8-mm video system or the VHS video system) employs magnetic-tape cassettes and associated helical-scan recorders to record the video signals in inclined juxtaposed discontinuous tracks on the magnetic tape. In order to guarantee interchangeability or compatibility between cassettes and apparatuses belonging to the system the known system has been standardized exactly in respect of all the characteristics and dimensions which are important in order to ensure compatibility.

Although the above-mentioned known system has been designed for recording and reproducing video signals various manufacturers have decided to market video recorders which, in addition, are capable of recording audio signals on the magnetic tape in conformity with a PCM (Pulse Code Modulation) standard. The relevant audio standard, or new standard, ensures that the cassettes on which audio signals have been recorded can be played back at least on all recorders with PCM audio recording/reproducing capability marketed by the same manufacturer.

It is not unlikely for a user of such a system employing two different standards, i.e. an old and a new one, to make mistakes. For example, a user can load a magnetic-tape cassette on which video signals have been recorded into a recorder with the intention of listening to music recorded in conformity with a PCM audio standard. Conversely, it is not excluded that a user who wishes to view a video program uses a cassette on which PCM audio signals have been recorded. In general, such mistakes can be avoided if the user is attentive. Moreover, the mistakes are generally not harmful to the cassette, the recorder or the user, so that a mistake has no serious consequences. However, there may be situations in which this is different. Examples of such situations will be given further below.

In the Compact Cassette system for recording analog audio signals the compatibility has even been laid down in an official standard, the international IEC standard of the International Electrotechnical Commission, see publication no. 94-7 (1986) issued by the central office of the IEC, Rue de Varembée 3, Geneva, Switzerland. The relevant system has found acceptance on a very large scale, several billions of Compact Cassettes in conformity with the said standard being manufactured worldwide every year. In the course of time their wide-spread use and general availability have led to the standard Compact Cassettes being employed for purposes which are not in compliance with the standard. For example, the Compact Cassette, generally provided with a slightly different magnetic tape, is employed as a magnetic storage for use in small computer systems. For such uses the information is recorded digitally on the magnetic tape in conformity with a second standard which differs completely from the first-mentioned standard.

Moreover, it has been proposed, see for example EP-B- 0,148,999, to record instead of an analog signal a PCM audio signal, which is a digital signal, on the magnetic tape of a Compact Cassette. It will be evident that, although the Compact Cassettes which are used always comply with the existing old standard equipment suitable for recording/reproducing analog signals and equipment suitable for recording/reproducing digital signals cannot be compatible. The differences between the apparatuses are generally not very large as far as the mechanical tape deck is concerned. Obviously, a different magnetic head must be used in conjunction with the different electronic circuits.

The likelihood that a user inserts a cassette on which analog signals have been recorded into an apparatus which is not suitable for recording/reproducing analog signals and, conversely, that a cassette on which digital signals have been recorded is loaded into an apparatus which is not suitable for recording/reproducing digital signals is not hypothetical because exactly the same cassettes are employed. Again it is true that, generally speaking, not much damage will be done. For example, in most cases the cassette will be labelled to indicate whether the cassette is intended for apparatuses in conformity with the old standard or apparatuses in conformity with the new standard. However, under conditions of poor visibility, for example in the case of inadequate lighting or in the dark, labelling of the cassettes will not provide a solution. For the visually handicapped and in particular for the blind this will be of no avail at all. Even in the case that the illumination is adequate and the user can read a label there may be circumstances in which it is not read. This may be caused by lack of attention, hurrying, because the user is diverted by other matters, because the user cannot read or cannot read or understand the language used, or because the user cannot pay attention to the label of the cassette for reasons of safety. This last-mentioned situation occurs, for example, when the cassette is used in a car or other vehicle, in which case the user should concentrate on driving the vehicle and on the traffic and therefore has to manipulate the cassette with only one hand without watching in order to load it into an apparatus.

In EP-A- 0,312,106 it is proposed to modify a known video cassette in order to record/reproduce video signals in accordance with a new standard. The new cassettes differ from the old cassettes in three respects. In the first place, the new cassette has an anti-erase feature at a location which is customary in the old cassette, so that it is not possible to make recordings on the new cassette in the old apparatuses. In the second place, the new cassettes have an erase-protection feature at another location, so that when the new cassettes are used in a new apparatus it is possible to allow or inhibit recording on the new cassette. In the third place, a main wall of the new cassette has a central coding aperture in which an insertion element can be fitted in different positions to encode the length and the type of tape accommodated in the cassette. Moreover, the presence or absence of the central coding aperture forms an indication of the presence of an old or a new cassette.

This proposed system may not be suitable to avoid confusion and incorrect use. In general, the intricate pattern of erase-protection features and coding apertures may prove too difficult for a user to distinguish easily between the different cassettes and the invention seeks to improve on this prior art in this respect.

It is an object of the invention to provide a new system of the type defined in the opening paragraph, which greatly reduces the likelihood of cassettes being mixed up between incompatible old and new apparatuses, and to this end the invention is characterized in that the digital cassette constitutes a modification of the Compact Cassette in conformity with CEI standard 94-7 and has the same principal dimensions but a standard deviating exterior shape, so that the digital cassette, although it has substantially the same principal dimensions, can be distinguished from the Compact Cassette in a distinctly visible and distinctly tactile manner in the absence of a distinctive labelling, in that the digital cassette has a portion of deviating shape at a location which in the Compact Cassette standard is not defined for cooperation with a part of an apparatus in conformity with the Compact Cassette standard, in that the portion of deviating shape of the digital cassette is situated on a main wall of the cassette and in that the deviating exterior shape of the digital cassette is provided at a location where the Compact Cassette has a thicker portion at its partly open front wall where both main walls are spaced at a locally larger distance from one another than in the remainder of the cassette, so that at the front the Compact Cassette has a locally thicker portion.

The invention has surprisingly great advantages for all kinds of systems of the type defined in the opening paragraph. By way of illustration the advantages will be set forth for a system derived from the existing Compact Cassettes in accordance with the existing old standard which, in addition to enabling audio signals in analog form to be recorded/reproduced in conformity with said old standard, enables digital audio signals to be recorded and/or reproduced in conformity with the new standard. As a result of the wide-spread use of the analog Compact Cassette system Compact Cassettes and the apparatuses cooperating therewith are cheap and reliable. It is therefore very attractive to make digital audio recording possible by means of cassettes and tape decks which deviate to a minimal extent from their prior-art counterparts. On the other hand, it should be avoided effectively that among the immensely large group of users of Compact Cassettes and Compact Cassette recorders confusion arises as regards the use of the cassettes and the apparatuses. The surprising idea of the invention resides in the use of cassettes which comply with a new standard, to a substantial extent, also with the old standard, but have a deviating external shape which is prescribed by the new standard and which is such that even when it is not labelled it will be evident to a user, whatever the circumstances, that it is a cassette in conformity with the new standard and not in conformity with the old standard. Since the deviating shape is also easy to discern to the touch, mixing up is less likely to occur or even excluded even in the case of little children, illiterates, visually handicapped or blind people but also people without a visual handicap in situations in which the exterior shape is not visible or in situations in which it is not possible to look at the cassette.

It is remarked that in GB-A- 2,131,000 it is proposed - contrary to the relevant standard - to provide video cassettes with outwardly projecting ribs at its side walls in order to inhibit playing in existing apparatuses in that the ribs prevent the cassette from being introduced into an insertion opening of "normal" players. Such a proposal is destined to fail because the dimensions of the insertion openings of apparatuses are not standardized. Moreover, apparatuses are known into which the cassette can be introduced from the top or sideways etc. The deviating exterior shape of the cassette is not intended to provide a clear distinction between substantially similar but incompatible cassettes. The proposed ribs on the side walls are not suitable for this purpose because their location and dimensions are such that they are not conspicuous enough. Moreover, they extend beyond the dimensions of a conventional cassette, which may give rise to problems in the cooperation with an apparatus.

When the invention is used the digital recording system, in conformity with the new standard does not require the large new investments usually involved in the introduction of an entirely new system, neither from the manufacturers of cassettes nor from the manufacturers of mechanical tape decks, because the cassettes are at least partly the same, i.e. unlike many of the new digital audio systems proposed until now, they do not differ in all respects. Since the cassettes have a portion of a deviating shape at a location which in the old standard is not defined for cooperation with a part of the apparatus there is no difference between the old standard and the new standard with respect to the cooperation between the cassettes and the decks. The huge amount of know-how and expertise acquired by manufacturers of tape decks for Compact Cassettes in more than twenty years is thus directly available without any restrictions, immediately upon the introduction of the digital audio recording system in accordance with the second standard, without giving rise to much foreseeable confusion among the users. Once they have been informed about it even handicapped users such as blind people, visually handicapped or illiterates can ascertain directly whether a cassette is in conformity with the old standard or in conformity with the new standard. Those who possess cassettes and apparatuses in accordance with both the old standard and the new standard can easily prevent an undesirable exchange. When a cassette apparatus in accordance with the new standard is used in an automobile a driver can feel with one hand, without taking the eyes off the road, whether an old or a new cassette is inserted into the apparatus.

The portion of deviating shape of the cassettes is situated on a main wall of the cassette. This has several important advantages. For example, for some prior-art cassettes, such as the Compact Cassette, the old standard defines several apertures in the rear wall, which are intended to be detected by means of sensors in the apparatus. These apertures are less suitable for visual or tactile identification because the apertures cannot readily be detected by feeling and, moreover, the average user cannot be assumed to be aware of the meaning of the aperture or apertures. Another aspect is that the main wall is much larger so that there is more room to accommodate different shapes. Consequently, they can be detected more easily and more rapidly both visually and by feeling. Moreover, in their containers the cassettes are generally also visible only or mainly at a main wall, so that this embodiment guarantees that a user can also recognise a cassette clearly when it is still in its container.

As is known, Compact Cassettes comprise parallel main walls interconnected by transverse walls, one of these transverse walls constituting an at least partly open front wall. Locally near the front wall the two main walls are spaced at a larger distance from one another than in the remainder of the cassette, so that the compact cassette is locally thicker at the front. This locally larger distance between the two main walls has a technical reason. This reason is that the magnetic head which cooperates with the magnetic tape in the old cassette has a larger width than the magnetic tape itself. The deviating exterior shape of the new digital cassettes is provided at a location where the old cassette has said thicker portion. Such a deviating shape can be detected immediately either by touch or visually.

An embodiment of the invention is characterized in that the new cassettes have a thicker portion which measured in a direction transverse to the front wall, is substantially smaller than in the old cassettes. Surprisingly, this modification of the well-known Compact Cassette is possible even without the correct operation of the cassette being affected. In the interior of the cassette, approximately halfway between the front wall and the rear of the thicker portion the Compact Cassette has an internal partition which assists in guiding the magnetic tape across the openings in the front wall. The part of the thicker portion which is situated behind this partition, however, does not serve any particular function and therefore the dimension of the thicker portion in said direction can be readily reduced substantially in order to obtain a distinctive feature for the new cassettes. An even further reduction can be obtained if the interior of the cassette is also modified. In the extreme case the thicker portion may be dispensed with completely in accordance with the further embodiment.

The visual and tactile effect of the changed dimension of the thicker portion of the cassette can be improved substantially in an embodiment of the invention which is characterized in that the thicker portion of the new cassette has a rear edge, remote from the front of the cassette, whose shape can be distinguished clearly from a straight edge by feeling. In Compact Cassettes the relevant edge, as is well-known, has a straight shape. A deviation from this straight shape is very conspicuous. For example, in a new cassette the rear edge of the thicker portion may be curved, other profiles being also possible, for example, undulating, knurled, or partly concave and partly convex etc. Suitably, use can also be made of another embodiment of the invention which is characterized in that the rear edge has a coded profile whose tactile coding is representative of a cassette parameter. An example of this is a coding of the playing time of the cassette so that it is directly visible but also discernible to the touch what the maximum player time of the cassette is.

Compact Cassettes, just like other cassettes intended as consumer products, are nearly always injection-moulded from a plastics. An embodiment of the invention in which a coded profile is formed at the rear of the thicker portion can be employed for in such plastics cassettes and is characterized in that after injection-moulding the coded profile can be obtained by external means by either forming or filling an opening in the main wall of the cassette. An important feature is that the coding should not be applied until after the injection-moulding process. In this way it is not necessary to use different injection-moulding dies for different new cassettes. Another advantage is that the manufacturers of CO-cassettes, i.e. substantially empty cassettes in which only a leader tape is present between the reel hubs and which in a later stage are provided with magnetic tape by other manufacturers, can manufacture and sell cassettes of a single type. The coding need not be applied until the cassette is loaded with a specific length of magnetic tape. For example, in a manner known per se, the cassette may be provided with break-out portions which can be removed from the cassette housing when this is desired. Another possibility is to fill openings formed in the housing with elements to be fitted subsequently.

Very great advantages can be obtained by the use of a further embodiment of the invention which relates to a digital apparatus conforming to a new standard and which belongs to the system for recording/reproducing digital audio signals of the invention. This embodiment is characterized in that the new digital apparatus is also adapted to play old cassettes provided with signals in accordance with the old standard. This means that consumers can play their analog Compact Cassettes on the new digital apparatuses, which for this purpose should obviously have the necessary provisions to read and amplify the analog signals. Preferably, the new apparatus is not capable of recording signals in conformity with the new standard on old cassettes and, in addition, is not capable of recording signals in conformity with the old standard on new cassettes. This would mean that in this embodiment it is not possible to record digital signals on a Compact Cassette by means of the new apparatus and, conversely, to record analog signals on the new cassette. The present embodiment is of very great significance in order not to "infect" both the analog Compact Cassette system and the new digital audio system. In this way it is ensured that Compact Cassettes with digital signals and new digital cassettes with Compact Cassette signals cannot be put into circulation via recordings made by the consumers themselves. This would lead to great confusion and would thus be in conflict with one of the objects of the invention.

New apparatuses for a new system as described hereinbefore may comprise sensing means for detecting the presence of the deviating shape of the new cassettes and may further comprise control means responsive to the sensing means to control a function of the apparatus depending on the type of cassette. A new apparatus of this construction has the advantage that the new apparatus itself, can detect fully automatically and independently of the user's advertentness whether an old or a new cassette is present.

An embodiment of a new apparatus as defined above may be further characterized in that the sensing means comprise a movable sensing element which is constructed to cooperate with a main wall of an inserted cassette at a location where a part of the thicker portion is situated in the old cassette only and which is movable between a first position, corresponding to the presence of an old cassette, and a second position, corresponding to the presence of a new cassette. In this way mechanical sensing means which are comparatively simple to realise are possible which cooperate with the cassette at a location where the cooperation between the cassette and the apparatus is irrelevant to compatibility.

Some embodiments of the invention will now be described in more detail, by way of example, with reference to the accompanying diagrammatic drawings in which:
Fig. 1 is a front view, partly sectional view, of an apparatus and an associated cassette,
Fig. 2 is a front view which is substantially identical to that of Fig. 1, of another apparatus and another cassette,
Fig. 3 is an exploded view of a well-known Compact Cassette,
Fig. 4 is a plan view of the cassette shown in Fig. 3, the shaded parts denoting cassette-supporting zones in conformity with the international standard for Compact Cassettes,
Fig. 5 to Fig. 8 are plan views of a part of a cassette which substantially corresponds to the Compact Cassette shown in Figs. 3 and 4 but which is locally modified, and
Fig. 9 is a sectional view taken on the line IX-IX in Fig. 8.

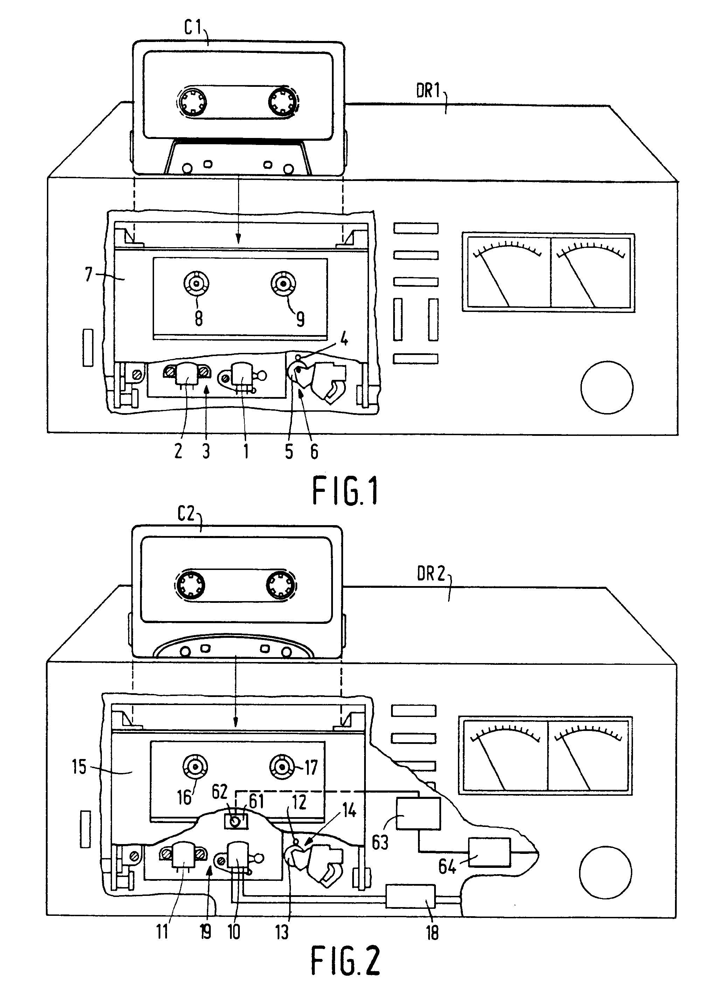

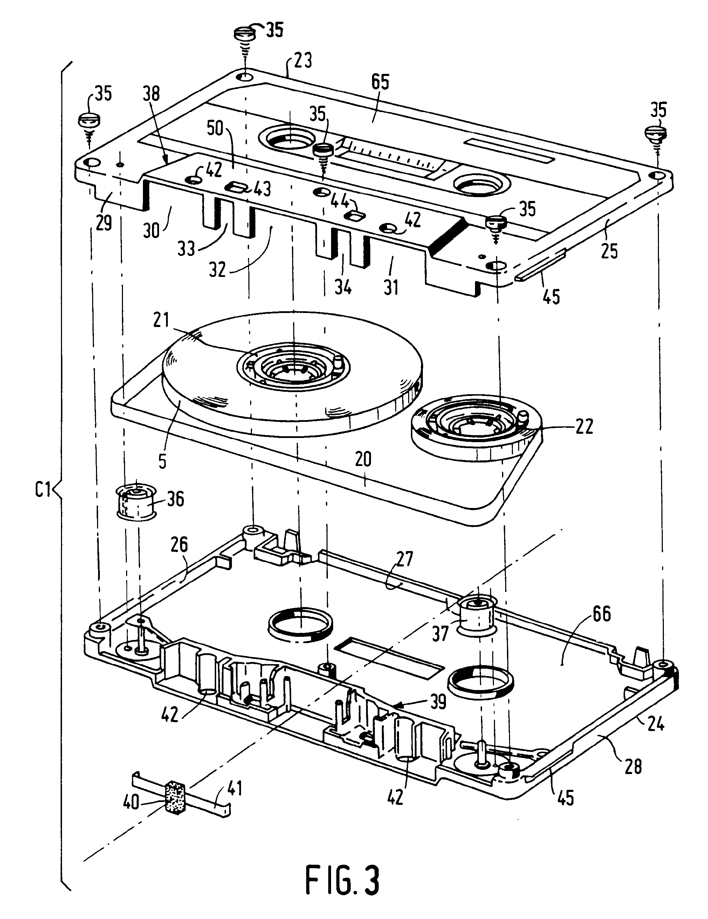

Figs. 1 and 2 show apparatuses DR1 and DR2 of the first standard type and a second standard type respectively. The apparatus DR1 is suitable for recording/reproducing signals in conformity with the aforementioned Compact Cassette standard. The apparatus DR2, however, is adapted to record/reproduce signals in conformity with a new standard which is not compatible with the old standard. In contradistinction to the Compact Cassette apparatus DR1 shown in Fig. 1, the apparatus DR2 is adapted to record and read digitally coded audio signals on/from a magnetic tape. The apparatus DR2 may be, for example, of a type as described in the NL-A- 8900214. In apparatuses of this previously proposed type the digital audio signal is divided among a plurality of parallel tracks on the magnetic tape, so that the magnetic-head means employed for recording/reproducing the signals should comprise a corresponding number of head gaps, for example ten head gaps. The apparatus DR1 comprises an analog magnetic head 1 of a type customary in Compact Cassette apparatuses and an erase head 2, which are together arranged on a customary movable head-mounting plate 3. For the purpose of tape transport a capstan 4 and a pressure roller 5 are provided, the latter forming part of the pivotable pressure-roller unit 6. Since Compact Cassette apparatuses of a variety of types are well-known from the prior art the apparatus DR1 will not be described in further detail. It is to be noted merely that the apparatus comprises a pivotable holder 7 for receiving a Compact Cassette and motor-driven winding spindles 8 and 9 for driving the reel hubs of the cassette.

The new apparatus DR2 is identical to the apparatus DR1 as far as possible, specifically as regards the mechanical parts and, in particular, as regards the tape deck. However, instead of an analog magnetic head it comprises a digital or combined analog/digital magnetic head 10. For further particulars on the positions of the head gaps in such a magnetic head reference is made to the afore-mentioned NL-A- 8900214. Moreover, it again comprises an erase head 11, a capstan 12, a pressure roller 13 forming part of a pressure-roller unit 14, a cassette holder 15, and winding spindles 16 and 17. The digital magnetic head 10 is connected to a discriminator circuit 18 whose significance and function will be described in further detail hereinafter. Again the two magnetic heads 10 and 11 are together arranged on a movable head-mounting plate 19.

In order to distinguish between the apparatuses DR1 and DR2 they will be referred to hereinafter as an analog (or old) apparatus and a digital (or new) apparatus respectively. The apparatuses belong to systems in accordance with a first standard - hereinafter referred to as the analog standard - and in accordance with a second standard - hereinafter referred to as the digital standard - which are obviously not compatible with each other.

The apparatuses of both types are constructed to operate in conjunction with cassettes C1 as defined in the old standard, i.e. the Compact Cassette standard. This is because mechanically the digital apparatuses are largely identical to the analog apparatuses, so that substantially the same components can be employed.

The digital apparatuses DR2 are moreover constructed to operate with cassettes C2 of a type in conformity with the digital standard. The cassettes C2 are modifications of the Compact Cassette C1 and have substantially the same basic dimensions. However, they have such a deviating exterior shape that a user of the cassettes C1 and C2, although the cassettes have substantially the same principal dimensions can yet distinguish them clearly from one another both visually and to the touch even in the absence of a distinctive labelling.

In conformity with the previous proposal in the afore-mentioned NL-A- 8900214 the digital apparatus DR2 can be constructed to record/reproduce digitally coded audio signals but, in addition, it can be constructed to at least reproduce analog audio signals recorded on a Compact Cassette. For this purpose the digital magnetic head 10 should be constructed in a special manner as described in the afore-mentioned Patent Application. The discriminator circuit 18 is constructed to detect fully automatically whether the magnetic head 10 reads analog or digital signals. Depending on the detected signal the signals are subsequently applied to analog or digital audio circuits.

The apparatus DR1 and the cassette C1 consequently form part of a system in conformity with the Compact Cassette standard. The apparatus DR2 and the cassette C2 belong to a second system in conformity with a digital second standard for recording/reproducing audio signals. However, the Compact Cassette C1 can be employed both in apparatuses in accordance with the Compact Cassette standard and in apparatuses in accordance with the digital second standard. In addition, the apparatuses in conformity with the digital standard are constructed to operate with cassettes C2 in accordance with the second standard.

Fig. 3 is an exploded view of the well-known Compact Cassette. The cassette accommodates a magnetic tape 20 wound on two reel hubs 21 and 22 arranged in a housing comprising two sections 23 and 24. The housing sections comprise parallel main walls 25 and 26. In addition, they comprise half transverse walls which together form a rear wall and two side walls interconnecting the main walls. The half transverse walls 25 to 28 are visible in the drawing. A transverse wall 29 at the front of the cassette constitutes a partly open front wall which is wholly integral with the housing section 23. In particular, openings 30 and 31 are provided for a pressure roller, a central opening 23 for one or more magnetic heads, and two smaller openings 33 and 34 for a tape-tension sensor. The housing sections are interconnected by means of five screws 35. Two guide rollers 36 and 37 are arranged inside the cassette to guide the magnetic tape.

At the location of the front wall 29 the main walls of the cassette are locally spaced at a larger distance from one another than in the remainder of the cassette. Thus, the cassette has a locally thicker portion 38 at its front. A fixed tape-guide unit 39, which is wholly integral with the lower housing section 24, is arranged behind the openings 30 to 34. A pressure felt 40 is arranged behind the central opening 32 by means of a leaf spring 41 to press the magnetic tape 20 against a magnetic head with a specific force. At the location of the thicker portion 38 the main walls have openings 42 for the passage of a capstan. Moreover, openings 43 and 44 are provided for the passage of locating pins on a deck of an apparatus. Near the front the side walls of the cassette are provided with ridges 45 which in the case of the Compact Cassette were originally intended to inhibit misinsertion of the cassette into a Compact Cassette apparatus.

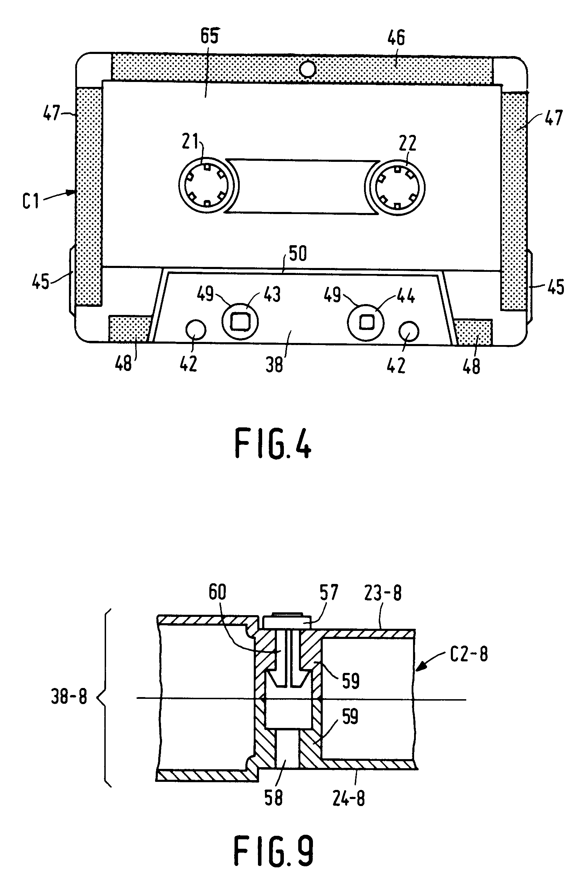

Fig. 4 shows the supporting zones 46 to 49 which are intended for cooperation with a Compact Cassette apparatus in conformity with the Compact Cassette standard.

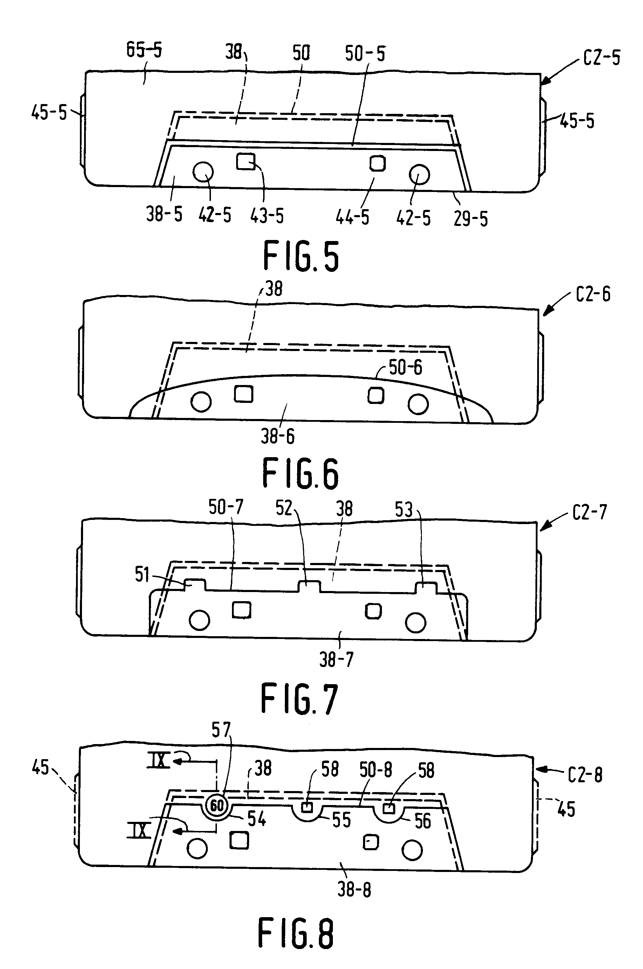

The digital cassettes C2 comprise a differently shaped portion at a location which in accordance with the Compact Cassette standard is not designated to cooperate with a part of a Compact Cassette apparatus. This differently shaped portion is situated on a main wall of the cassette. In Figs. 5 to 8, which relate to embodiments of the cassette C2, those parts of the cassette which correspond to the Compact Cassette C1 bear reference numerals corresponding to those used in Figs. 3 and 4. However, the embodiments of the cassette C2 shown herein are distinguished from each other by suffixing the Figure number. For example, the embodiment shown in Fig. 5 is referred to as C2-5 and the embodiment shown in Fig. 8 as C2-8.

The cassettes C2-5 to C2-8 are largely identical to the Compact Cassette C1 but the thicker portion 38 of these cassettes, measured in a direction transverse to the front wall, is substantially smaller than that of the Compact Cassette. In the Figures the thicker portion 38 of the Compact Cassette is indicated in broken lines by way of illustration. It will be noted that in Figs. 5 to 7 the size of the thicker portion, measured in a direction transverse to the front wall, is substantially half the size of this portion of the Compact Cassette. This is possible because the distance between the tape-guide unit 39 and the front wall 29 of the Compact Cassette is considerably smaller than the distance from the rear 50 of the thicker portion 38. The invention creatively utilises the surprising fact that at its location to the rear of the tape-guide unit 39 the thicker portion 38 of the well-known Compact Cassette in fact does not serve any particular function. Therefore, the dimension of the thicker portion of the cassette of the system in accordance with the invention may be readily reduced to substantially half the original size.

Consequently, the rear wall 50-5 of the cassette C2-5 is located considerably closer to the front wall 29-5 than the rear wall 50 of the Compact Cassette C1 is situated from the front wall 29. Such a considerable difference is easy to discern by the eye but also by feeling, so that there is distinct difference between cassettes of the two types, even in the absence of a distinctive labelling.

In the cassette C2-6 in Fig. 6 the rear 50-6 of the thicker portion 38-6 has an arcuate rounded shape which differs completely from the shape of the rear wall 50 of the Compact Cassette. The rear wall 50-6 is situated not only closer to the front wall of the cassette, which in itself provides a tangible and visible distinction, but in addition the shape of the rear wall differs to such an extent from that of the Compact Cassette that an even more pronounced distinction is obtained. In the embodiment shown in Figs. 7 and 8 the rear wall of the thicker portion is formed with a readily visible and tactile profile. Thus, it is easy to feel the difference between the rear walls 50-7 and 50-8 of the cassettes C2-7 and C2-8 and the rear wall 50 of the thicker portion 38 of a Compact Cassette, regardless of the smaller dimension in a direction transverse to the front wall.

Compact Cassettes, as well as nearly all the other known cassettes intended for use as consumer products, are normally manufactured by injection moulding from a plastics. With injection moulding it is not difficult to give the rear wall of the thicker portion the desired profile. The back of the thicker portion may even be provided with a coded profile to provide a tactile coding of a cassette parameter. Thus, it is possible, for example, to manufacture the cassette C2-7 shown in Fig. 7 in different versions, provided with a single projection 51, two projections 51 and 52, or three projections 51 to 53. In this way three different cassette parameters can be distinguished from each other. For example, the presence of the projection 51 alone may be indicative of a length of magnetic tape in the cassette which is adequate for a recording time of 60 minutes. The presence of both the projections 51 and 52 may indicate a playing time of 90 minutes and the presence of the three projections 51 to 53 may denote a playing time of 120 minutes. Obviously, this implies that the different versions of the cassette C2-7 have to be manufactured by means of different dies. Moreover, it has a disadvantage for the users of CO cassettes. CO cassettes are cassettes which have not yet been provided with a magnetic tape but which merely contain a leader tape arranged between the two reel hubs. Cassettes of this type can be provided fully automatically with a length of magnetic tape by means of suitable loaders by withdrawing a small length of leader tape from the cassette on the loader, by severing it and splicing it to a magnetic tape, by winding a suitable length of the magnetic tape into the cassette to one side, by severing the magnetic tape and by subsequently splicing this to the other part of the leader tape. When cassettes in a plurality of versions provided with different tape-length codings are used this will constitute an additional complication for the company which loads the magnetic tape into the cassette. It means that cassettes of different types have to be kept in stock and, moreover, that care should be taken to ensure that only the correct type of cassette is fed to the relevant loader which loads the appropriate length of magnetic tape into the cassette. Moreover, the manufacturer of the CO cassettes should also keep separate stocks of cassettes of different types.

These problems are solved by using an embodiment as shown in Fig. 8. In the cassettes in accordance with this embodiment the rear wall of the thicker portion also has a profile enabling it to be always distinguished from a Compact Cassette. The profile comprises three recesses 54, 55 and 56, which in all the cases are formed during the injection-moulding process, so that the cassette housings are identical for all the cassettes of the type C2-8. It is to be noted that to enable the cassette C2-8 to be more readily distinguished from the Compact Cassette no ridges corresponding to the ridges 45 of the Compact Cassettes are formed on the side walls of the cassette. This also constitutes a tactile and visible distinctive feature. These ridges are prescribed by the Compact Cassette standard but no longer have any practical function.

After the cassette C2-8 has been injection-moulded the profile is subsequently coded by external means, namely by filling one or more of the recesses 54 to 56 in the main wall of the cassette. As is illustrated by way of example in Fig. 8 a cap 57 is fitted in the recess 54 to code the cassette C2-8 for 60 minutes playing time. For mounting caps of this type three rectangular openings 58 are formed in the main wall of the cassette C2-8. As is shown in Fig. 9, the openings 58 are formed in raised portions 59 which adjoin one another inside the cassette. Thus, the openings 58 do not allow the penetration of ambient dirt and dust into the interior of the cassette. As is shown in the drawings the openings 58 may be rectangular. The cap 57 comprises a split resilient shank 60 for rapid and easy snap-mounting. The shank 60 is of rectangular cross-section in conformity with the outline of the opening 58. The shank 60 is thus locked against rotation in the opening 58. Consequently, if there are any symbols on the cap 57 they remain in the same position relative to the remainder of the cassette. Obviously, the caps may be of different colours. If the caps have a colour which contrasts with that of the cassette housing this provides an additional visual indication of the fact that it is a cassette in conformity with the standard which differs from the Compact Cassette standard.

The digital apparatus DR2 shown in Fig. 2 comprises sensing means 61 to detect the presence of the deviating shape of the cassettes C2 of the second type and comprises control means 18 which are responsive to the sensing means to control a function of the apparatus depending on the type of cassette being present. The sensing means 61 comprise a movable sensing element in the form of a depressible pin 62 adapted to cooperate with a main wall of a cassette at the location where a part of the thicker portion 38 is located only in the cassette C1. The sensing pin 62 is movable between a more inward first position, which corresponds to the presence of a cassette C1, and a second position, which corresponds to the presence of a cassette C2. In the first position the sensing pin is pressed further inwards towards the interior of the apparatus by the thicker portion 38 of the cassette C1. In the second position the sensing pin is situated at a higher level because the sensing pin is situated outside the area of the thicker portion of the cassette C2 and therefore cannot be depressed by the thicker portion of the modified cassette. The sensing pin 62 actuates a switch to signal to the control means 63 whether a cassette of the type C1 or C2 is present. The control means 63 may be connected to other circuit parts of the apparatus DR2 in such a way that recording of digital audio signals on a normal Compact Cassette C1 is inhibited. It is also possible to control other functions. For example, the control means may control inhibit means in the form of an inhibit circuit 64 to inhibit both the recording and reproduction of signals in whatever form.

The use of the invention in magnetic-tape-cassette systems in the audio field, where the first standard is the Compact Cassette standard, has great advantages for the consumer. This is because a system as already proposed in the afore mentioned NL-A- 8900214, in which the apparatuses of the second type are suitable for digitally recording/reproducing audio signals, has the great advantage that the several billions of Compact Cassettes on which prerecorded analog audio signals, which are already in use world-wide, can be played back on the novel digital audio apparatuses. Thus, the system guarantees that, also after the purchase of a new digital audio recorder, the immense quantities of existing Compact Cassettes recorded by analog methods can still be played on the new apparatus. Moreover, the price of the mechanical part of the digital system, as a result of the use of many existing components and production machines, may be relatively low.

It is obvious that the current analog Compact Cassette apparatuses already present at the consumer's are not suitable for playing back magnetic-tape cassettes provided with digital signals. The significance of the invention is therefore that the consumer can quickly, simply and without being diverted discern the type of cassette to the touch or visually. For manufacturers of apparatuses the principal advantage is that the decks employed in the digital audio apparatuses can be identical or at least substantially identical to those which have already been employed for a long time in audio apparatuses of the Compact Cassette type. For manufacturers of audio cassettes and companies which load magnetic tape into audio cassettes the principal advantage is that the digital cassettes with respect to their main dimensions and shapes can be identical, at least to a substantial extent, to the well-known Compact Cassettes because the new cassette has been modified only to a limited extent. Moreover, the modifications may suitably be situated at a location which is not relevant to the cooperation between cassettes and apparatuses so that the decks for the novel digital cassette apparatuses need not or hardly differ from those for Compact Cassette apparatuses.

The modifications to the cassette described so far concern modifications to the thicker portion of the Compact Cassette and the removal of the ridges on the side walls. However, within the scope of the invention all kinds of additional modifications are conceivable. Possible modifications may comprise additional stationary and/or movable parts on the cassette or instead the omission of parts. Modifications to the main wall are the most conspicuous and are easy to discern to the touch.

The sensing means of the apparatuses need not be of a mechanical type but may be of any other conceivable type, for example optical, inductive or capacitive. Depending on the type of cassette the control means can control different functions of the apparatus. Many prior-art magnetic-tape-cassette apparatuses comprise a slide in which the cassette can be placed and which can be moved into the apparatus housing under motor control in order to play the cassette. The control means may ensure for example that when a cassette of a wrong type is inserted the cassette is rejected or ejected. Another possibility is to actuate an audible or visible alarm to draw the users attention to the fact that the wrong cassette has been inserted. Yet another possibility is that insertion of a cassette of a wrong type into an apparatus is inhibited mechanically by the scanning means, which may be effected in conjunction with the control means. This can be achieved, for example, in that the apparatus comprises parts adapted to cooperate with parts of a cassette and thereby mechanically block insertion of the cassette.

The apparatuses DR2 should accept cassettes C1 and should therefore comprise all the means required for this purpose. This implies that the cassettes C2 should not or hardly differ from the cassette C1 in a number of respects. Nevertheless, the modifications to the cassette C2 may be far more comprehensive than those to the embodiments described with reference to the drawings.

The coding of cassette parameters as described with reference to Fig. 8 may be used in conjunction with means provided in an apparatus for scanning the coding (optical, mechanical etc.). Such a system is known from US-A- 4,339,776. The detected cassette parameter is the maximum playing time of the cassette. This value is transferred to a device for preprogramming time-scheduled recordings of broadcasts. This precludes that more recordings are preprogrammed than can be recorded on the cassette.

## Claims

1. A system for recording/reproducing digital audio signals on magnetic tape in cassettes, comprising apparatuses and cassettes of a new digital type in conformity with a new digital standard, characterized in that the digital cassette constitutes a modification of the Compact Cassette in conformity with CEI standard 94-7 and has the same principal dimensions but a standard deviating exterior shape, so that the digital cassette, although it has substantially the same principal dimensions, can be distinguished from the Compact Cassette in a distinctly visible and distinctly tactile manner in the absence of a distinctive labelling, in that the digital cassette has a portion of deviating shape at a location which in the Compact Cassette standard is not defined for cooperation with a part of an apparatus in conformity with the Compact Cassette standard, in that the portion of deviating shape of the digital cassette is situated on a main wall of the cassette and in that the deviating exterior shape of the digital cassette is provided at a location where the Compact Cassette has a thicker portion at its partly open front wall where both main walls are spaced at a locally larger distance from one another than in the remainder of the cassette, so that at the front the Compact Cassette has a locally thicker portion.

2. A system as claimed in Claim 1, characterized in that measured in a direction transverse to the front wall the thicker portion of the digital cassette is substantially smaller than that of the Compact Cassette.

3. A system as claimed in Claim 2, characterized in that the digital cassette does not have the thicker portion.

4. A system as claimed in Claim 2 or 3, characterized in that the digital cassette has a thicker portion having a rear edge, remote from the front of the cassette, which rear edge can be distinguished clearly from a straight edge by feeling.

5. A system as claimed in Claim 4, characterized in that the rear edge has a coded profile whose tactile coding is representative of a cassette parameter.

6. A system as claimed in Claim 5, characterized in that the digital cassette comprises a housing which is injection-moulded from a plastics and in that after injection-moulding the coded profile can be obtained by external means by either forming or filling an opening in the main wall of the cassette.

7. A digital cassette belonging to the system as claimed in any one of the preceding Claims.

8. A digital apparatus belonging to the system as claimed in any one of the preceding claims characterized in that the digital apparatus is also adapted to play Compact Cassettes provided with analog audio signals in accordance with the standard CEI 94-7.

9. A digital apparatus as claimed in Claim 8, characterized in that it is not capable of recording analogue audio signals in conformity with standard CEI 94-7 on a digital cassette and, in addition, is not capable of recording digital signals in conformity with the new digital standard on a Compact Cassette.

10. A digital apparatus as claimed in Claim 8 of 9, characterized in that the apparatus comprises sensing means for detecting the presence of the deviating shape of the digital cassette and further comprises control means responsive to the sensing means to control a function of the apparatus depending on the type of a cassette detected.

11. A digital apparatus as claimed in Claim 8 or 9, characterized in that the sensing means comprise a movable sensing element which is constructed to cooperate with a main wall of an inserted cassette at a location where a part of the thicker portion is situated in Compact Cassettes only and which is movable between a first position, corresponding to the presence of a Compact Cassette, and a second position, corresponding to the presence of a digital cassette.

## Patentansprüche

1. System zum Aufnehmen/Wiedergeben von Signalen auf Magnetband in Kassetten mit Geräten und Kassetten einer neuen digitalen Art nach einer neuen digitalen Norm, dadurch gekennzeichnet, daß die digitale Kassette eine Modifikation der Compact-Kassette entsprechend der CEI-Norm 94-7 bildet und dieselben Hauptabmessungen hat aber eine genormte abweichende äußere Form aufweist, so daß die digitale Kassette, obschon wenigstens in Hauptabmessungen gleich, ohne eine unterscheidende Bedruckung auf deutlich sichtbare und fühlbare Art und Weise vom Benutzer von der Compact-Kassette unterschieden werden kann, daß die digitale Kassette einen Teil einer anderen Abmessung an einer Stelle aufweist, die bei der Compact-Kassette nicht definiert ist zum Zusammenarbeiten mit einem Teil eines Geräts entsprechend der Compact-Kassette-Norm, daß der Teil mit abweichender Form der digitalen Kassette in einer Hauptwand der Kassette liegt und daß die abweichende äußere Form der digitalen Kassette an derjenigen Stelle vorgesehen ist, wo die Compact-Kassette an der telweise geöffneten Vorderwand, wo die beiden Hauptwände in einem größeren Abstand voneinander liegen als beim restlichen Teil der Kassette, einen dickeren Teil hat, so daß die Compact-Kassette auf der Vorderseite einen örtlich dickeren Teil hat.

2. System nach Anspruch 1, dadurch gekennzeichnet, daß gemessen in einer Richtung quer zu der Vorderwand der dickere Teil der digitalen Kassette wesentlich kleiner ist als der der Compact-Kassette.

3. System nach Anspruch 2, dadurch gekennzeichnet, daß die digitale Kassette den dickeren Teil nicht aufweist.

4. System nach Anspruch 2 oder 3, dadurch gekennzeichnet, daß die digitale Kassette einen dickeren Teil aufweist mit einem hinteren Rand in einem Abstand von der Vorderseite der Kassette, wobei dieser hintere Rand von einem geraden Rand auf Gefühl deutlich unterschieden werden kann.

5. System nach Anspruch 4, dadurch gekennzeichnet, daß der hintere Rand ein kodiertes Profil aufweist, wobei die fühlbare Kodierung für einen Kassettenparameter repräsentiv ist.

6. System nach Anspruch 5, dadurch gekennzeichnet, daß die digitale Kassette ein Gehäuse aufweist, das aus einem Kunststoff im Spritzgußverfahren hergestellt worden ist und daß nach diesem Spritzgußvorgang durch Bildung einer Öffnung in der Hauptwand der Kassette oder durch Füllung dieser Öffnung das kodierte Profil durch äußere Mittel erhalten werden kann.

7. Digitale Kassette, gehörend zu dem System nach einem der vorstehenden Ansprüche.

8. Digitales Gerät, gehörend zu dem System nach einem der vorstehenden Ansprüche, dadurch gekennzeichnet, daß es auch Compact-Kassetten mit analogen Audio-Signalen entsprechend der Norm CEI 94-7 abspielen kann.

9. Digitales Gerät nach Anspruch 8, dadurch gekennzeichnet, daß es nicht imstande ist, analoge Audiosignale entsprechend der Norm CEI 94-7 auf einer digitalen Kassette aufzunehmen und außerdem nicht imstande ist, digitale Signale entsprechend der neuen digitalen Norm auf einer Compact-Kassette aufzunehmen.

10. Digitales Gerät nach Anspruch 8 oder 9, dadurch gekennzeichnet, daß das Gerät Abtastmittel zum Abtasten des Vorhandenseins der abweichenden Form der digitalen Kassette aufweist und weiterhin Steuermittel aufweist, die auf die Abtastmittel reagieren zur Steuerung einer Funktion des Geräts je nach der Art einer detektierten Kassette.

11. Digitales Gerät nach Anspruch 8 oder 9, dadurch gekennzeichnet, daß die Abtastmittel ein bewegliches Tastelement aufweisen, das mit einer Hauptwand einer eingesteckten Kassette an einer Stelle zusammenarbeitet, an der sich nur bei der Compact-Kassette ein Teil der Verdickung befindet, der zwischen einer ersten Lage, entsprechend dem Vorhandensein einer Compact-Kassette, und einer zweiten Lage, entsprechend dem Vorhandensein einer digitalen Kassette beweglich ist.

## Revendications

1. Système pour enregistrer/reproduire des signaux audio numériques sur bande magnétique dans des cassettes, comprenant des appareils et des cassettes d'un nouveau type numérique en conformité avec une nouvelle norme numérique, caractérisé par le fait que la cassette numérique est une modification de la cassette compacte conforme à la norme CEI 94-7 et possèdent les mêmes dimensions principales, mais une forme extérieure qui s'écarte de la norme, afin que la cassette numérique, quoiqu'elle ait substantiellement les mêmes dimensions principales, puisse être distinguée de la cassette compacte d'une manière distinctement visible et distinctement tactile, en l'absence d'un étiquetage distinctif; par le fait que la cassette numérique a une partie de forme distincte à un endroit qui, dans la cassette compacte normalisée, n'est pas défini pour coopérer avec une partie d'un appareil conforme à la cassette compacte normalisée; par le fait qu'une partie de la forme distincte de la cassette numérique est située sur une paroi principale de la cassette; et par le fait que la forme extérieure distincte de la cassette numérique est située à un endroit où la cassette compacte a une partie plus épaisse à sa paroi avant partiellement ouverte où les deux parois principales sont espacées l'une de l'autre d'une distance localement plus grande que dans le reste de la cassette, afin qu'à l'avant, la cassette compacte possède une partie localement plus épaisse.

2. Système suivant la revendication 1, caractérisé par le fait que mesurée dans une direction transversale à la paroi avant, la partie plus épaisse de la cassette numérique est sensiblement inférieure à celle de la cassette compacte.

3. Système suivant la revendication 2, caractérisé par le fait que la cassette numérique ne comporte pas la partie plus épaisse.

4. Système suivant la revendication 2 ou 3, caractérisé par le fait que la cassette numérique possède une partie plus épaisse ayant un bord arrière éloignéde l'avant de la cassette, ledit bord arrière pouvant se distinguer clairement au toucher d'un bord droit.

5. Système suivant la revendication 4, caractérisé par le fait que le bord arrière a un profil codé dont le codage tactile est représentatif d'un paramètre de cassette.

6. Système suivant la revendication 5, caractérisé par le fait que la cassette numérique comporte un boîtier qui est moulé par injection à partir d'une matière plastique et par le fait qu'après le moulage par injection, le profil codé peut être obtenu par des moyens externes, par formage ou par remplissage d'une ouverture dans la paroi principale de la cassette.

7. Cassette numérique appartenant au système suivant l'une quelconque des revendications précédentes.

8. Appareil numérique appartenant au système suivant l'une quelconque des revendications précédentes, caractérisé par le fait que l'appareil numérique est également adapté à la lecture de cassettes compactes pourvues de signaux audio analogiques conformément à la norme CEI 94-7.

9. Appareil numérique suivant la revendication 8, caractérisé par le fait qu'il n'est pas capable d'enregistrer des signaux audio analogiques en conformité avec la norme CEI 94-7 sur une cassette numérique et, en outre, qu'il n'est pas capable d'enregistrer des signaux numériques en conformité avec la nouvelle norme numérique sur une cassette compacte.

10. Appareil numérique suivant la revendication 8 ou 9, caractérisé par le fait que l'appareil comporte des moyens capteurs pour détecter la présence d'une forme distincte de la cassette numérique et qu'il comporte, en outre, des moyens de commande qui réagissent aux moyens capteurs pour commander une fonction de l'appareil dépendant du type de cassette détectée.

11. Appareil numérique suivant la revendication 8 ou 9, caractérisé par le fait que des moyens capteurs comportent un élément mobile de détection qui est construit pour coopérer avec une paroi principale d'une cassette introduite à un endroit où une part de la partie plus épaisse est située dans des cassettes compactes uniquement et qui est susceptible de se déplacer entre une première position correspondant à la présence d'une cassette compacte, et une seconde position correspondant à la présence d'une cassette numérique.
